# EUROPÄISCHE PATENTANMELDUNG

(11) **EP 4 184 043 A1**
(43) Veröffentlichungstag der Anmeldung: **24.05.2023**
(21) Anmeldenummer: 21208791.0
(22) Anmeldetag: 17.11.2021
(51) Int. Cl.: F16K 11/074, A47L 15/44, D06F 39/02, A47L 15/00, D06F 33/37

(54) **VENTIL ZUM AUSWÄHLEN ODER VERTEILEN VON FLÜSSIGKEITEN MIT ZENTRALEM SPÜLMITTELRESERVOIR**

(71) Anmelder: Hagleitner, Hans Georg, 5700 Zell am See (AT)
(72) Erfinder: Hagleitner, Hans Georg, 5700 Zell am See (AT)
(74) Vertreter: Torggler & Hofmann Patentanwälte - Innsbruck

(57) **Zusammenfassung**

Ventil (11) zum Auswählen von Flüssigkeiten umfassend
- mindestens einen Eingangsteil (10), wobei im mindestens einen Eingangsteil (10) mindestens zwei Eingangskanäle (7) vorgesehen sind, und
- mindestens einen Ausgangsteil (9), wobei im mindestens einen Ausgangsteil (9) mindestens ein Ausgangskanal (6) vorgesehen ist, und
- ein Spülmittelreservoir (12),
wobei der mindestens eine Eingangsteil (10) und der mindestens eine Ausgangsteil (9) miteinander, zumindest bereichsweise dichtend, in mindestens einer Kontaktebene (17) kontaktieren und wobei der mindestens eine Eingangsteil (10) gegenüber dem mindestens einen Ausgangsteil (9) um eine gedachte Drehachse drehbar gelagert ist, sodass der mindestens eine Ausgangskanal (6) durch Drehung des mindestens einen Ausgangsteils (9) relativ zum mindestens einen Eingangsteil (10) in kommunikative Verbindung mit einem der mindestens zwei Eingangskanäle (7) oder mit mindestens einem Spülmittelauslassbereich (32) des Spülmittelreservoirs (12) bringbar ist, wobei das Spülmittelreservoir (12) durch mindestens eine relativ zur mindestens einen Kontaktebene (17) versetzte Vertiefung (24) im mindestens einen Eingangsteil (10) und/oder im mindestens einen Ausgangsteil (9) ausgebildet ist, wobei die gedachte Drehachse durch die mindestens eine Vertiefung (24) verläuft.

## Beschreibung

Die Erfindung betrifft ein Ventil zum Auswählen von Flüssigkeiten umfassend mindestens einen Eingangsteil, wobei im mindestens einen Eingangsteil mindestens zwei Eingangskanäle vorgesehen sind, mindestens einen Ausgangsteil, wobei im mindestens einen Ausgangsteil mindestens ein Ausgangskanal vorgesehen ist, und ein Spülmittelreservoir. Der mindestens eine Eingangsteil und der mindestens eine Ausgangsteil kontaktieren miteinander, zumindest bereichsweise dichtend, in mindestens einer Kontaktebene und der mindestens eine Eingangsteil ist gegenüber dem mindestens einen Ausgangsteil um eine Drehachse drehbar gelagert, sodass der mindestens eine Ausgangskanal durch Drehung des mindestens einen Ausgangsteils relativ zum mindestens einen Eingangsteil in kommunikative Verbindung mit einem der mindestens zwei Eingangskanäle oder mit mindestens einem Spülmitteleinlassbereich des Spülmittelreservoirs bringbar ist.

Beispielsweise können die mindestens zwei Eingangskanäle über Leitungen jeweils mit einem Produktbehälter, welcher eine Flüssigkeit enthält, verbunden werden, sodass durch eine Drehung des mindestens einen Ausgangsteils relativ zum mindestens einen Eingangsteil unterschiedliche Flüssigkeiten durch den mindestens einen Ausgangskanal förderbar sind. Der mindestens eine Ausgangskanal kann wiederrum an mindestens einer Waschmaschine und/oder mindestens einem Geschirrspüler anschließbar sein. Mittels des Ventils können dann verschiedene Flüssigkeiten (beispielsweise verschiedene Waschmittel) ausgewählt werden. Zudem kann der mindestens eine Ausgangskanal mittels des Spülmittelreservoirs mit Spülmittel (beispielsweise Wasser) gespült werden. Rückstände von vorher geförderten Flüssigkeiten können damit aus dem mindestens einen Ausgangskanal und anschließenden Leitungen entfernt werden.

Ventile zum Auswählen von Flüssigkeiten der genannten Art sind aus dem Stand der Technik bereits bekannt. Die Druckschrift EP 3 376 080 A1 zeigt ein Ventil zum Auswählen von Flüssigkeiten der eingangs genannten Art. Ein Spülmittelreservoir ist hier über ein Verteilernutensystem realisiert, wobei das Verteilernutensystem eine ringförmige Verteilernut und mehrere Nutfortsätze aufweist. Die Nutfortsätze können mit dem Ausgangskanal in kommunikative Verbindung gebracht werden.

Nachteilig am Stand der Technik ist, dass der Strömungswiderstand des Flusses des Spülmittels, welches durch das verwinkelte Verteilernutensystem fließen muss, relativ groß ist. Damit muss das Spülmittel mit einem relativ hohen Druck oder Unterdruck durch das Ventil gedrückt oder gesaugt werden.

Außerdem sind ist die Form und Länge des Weges vom Spülmitteleinlass zu einem bestimmten Ausgangskanal über das Verteilernutensystem stark voneinander verschieden, womit sich die Strömungswiderstände je nach Schaltstellung des Ventils stark voneinander unterscheiden. Dies führt zu einer ungleichmäßigen Spülung der Ausgangskanäle je nach Schaltstellung.

Die Aufgabe der vorliegenden Erfindung ist es, ein Ventil zum Auswählen von Flüssigkeiten zu schaffen, welches eine effiziente und gleichmäßige Spülung der Ausgangskanäle ermöglicht.

Die Aufgabe wird von den Gegenständen der Ansprüche 1, 2, 13 und 17 gelöst.

Erfindungsgemäß ist demnach vorgesehen, dass das Spülmittelreservoir durch mindestens eine relativ zur mindestens einen Kontaktebene versetzte Vertiefung im mindestens einen Eingangsteil und/oder im mindestens einen Ausgangsteil ausgebildet ist, wobei die gedachte Drehachse durch die mindestens eine Vertiefung verläuft.

Dadurch, dass die Vertiefung auch zentral im Bereich der mindestens Drehachse angeordnet ist, womit dort folglich im Gebrauch Spülmittel angeordnet ist, lässt sich eine gleichmäßige und effiziente Verteilung des Spülmittels zum mindestens einen Ausgangskanal erreichen.

Diese Ausführungsform realisiert ein Auswahlventil oder ein Sammelventil, mit welchem wahlweise Flüssigkeiten von mindestens zwei, vorzugsweise acht, Eingangskanälen auf mindestens einen, vorzugsweise zwei, Ausgangkanal sammelt.

Ein Ventil zum Verteilen von Flüssigkeiten umfasst mindestens einen Eingangsteil, wobei im mindestens einen Eingangsteil mindestens ein Eingangskanal vorgesehen ist, und mindestens einen Ausgangsteil, wobei im mindestens einen Ausgangsteil mindestens zwei Ausgangskanäle vorgesehen sind, und ein Spülmittelreservoir, wobei der mindestens eine Eingangsteil und der mindestens eine Ausgangsteil miteinander, zumindest bereichsweise dichtend, in mindestens einer Kontaktebene kontaktieren und wobei der mindestens eine Eingangsteil gegenüber dem mindestens einen Ausgangsteil um eine gedachte Drehachse drehbar gelagert ist, sodass mindestens einer der mindestens zwei Ausgangskanäle durch Drehung des mindestens einen Ausgangsteils relativ zum mindestens einen Eingangsteil in kommunikative Verbindung mit dem mindestens einen Eingangskanal oder mit mindestens einem Spülmittelauslassbereich des Spülmittelreservoirs bringbar ist.

Erfindungsgemäß ist vorgesehen, dass das Spülmittelreservoir durch mindestens eine relativ zur mindestens einen Kontaktebene versetzte Vertiefung im mindestens einen Eingangsteil und/oder im mindestens einen Ausgangsteil ausgebildet ist, wobei die gedachte Drehachse durch die mindestens eine Vertiefung verläuft.

Dieses Ventil weist daher die gleichen Vorteile wie das oben beschriebene, erfindungsgemäße Ventil zum Auswählen von Flüssigkeiten auf.

Diese alternative Ausführungsform realisiert ein Verteilerventil, mit welchem Flüssigkeiten von mindestens einem, vorzugsweise zwei, Eingangskanal wahlweise auf mindestens zwei, vorzugsweise acht, Ausgangkanäle aufteilt.

Bevorzugt ist vorgesehen, dass im Betrieb beider erfindungsgemäßer Ausführungsformen des Ventils Flüssigkeiten vom Eingangskanal (oder von den Eingangskanälen) in den Ausgangskanal (oder in die Ausgangskanäle) strömen.

Es kann vorgesehen sein, dass im Betrieb beider erfindungsgemäßer Ausführungsformen des Ventils Flüssigkeiten vom Ausgangskanal (oder von den Ausgangskanälen) in den Eingangskanal (oder in die Eingangskanäle strömen. Dies entspricht einem umgekehrten anschließen des Ventils in einer der beiden Ausführungsformen. Insofern kann das Ventil zum Auswählen von Flüssigkeiten durch umgekehrtes anschließen als Ventil zum Verteilen von Flüssigkeiten verwendet werden, und umgekehrt.

Die folgenden Ausführungsbeispiele beziehen sich auf beide erfindungsgemäße Ventile.

Bevorzugt ist die mindestens eine Vertiefung so ausgeformt, dass eine auf die Drehachse orthogonale, gedachte Gerade zwischen dem mindestens einen Spülmittelauslassbereich und der Drehachse vollständig in der mindestens einen Vertiefung angeordnet ist. Dadurch kann Spülmittel von einem Bereich der Drehachse zum Spülmittelauslassbereich auf geradem Wege strömen. Dadurch bleibt der Strömungswiderstand gering.

Es kann auch vorgesehen sein, dass eine auf die Drehachse orthogonale, gedachte Gerade zwischen dem mindestens einen Spülmittelauslassbereich und einem Punkt im Bereich der Drehachse vollständig in der mindestens einen Vertiefung angeordnet ist.

Es kann vorgesehen sein, dass die mindestens eine Vertiefung eine im Wesentlichen zylindrische Ausnehmung aufweist, wobei die gedachte Drehachse durch die zylindrische Ausnehmung verläuft. Bevorzugt ist dabei vorgesehen, dass die gedachte Drehachse durch die Mittelachse der zylindrischen Ausnehmung verläuft. Durch die Ausformung eines Teils der mindestens einen Vertiefung als zylindrische Ausnehmung wird ein zentraler "See" geschaffen, in welchem sich Spülmittel ohne großen Strömungswiderstand verteilen kann.

Zusätzlich oder alternativ kann die mindestens eine Vertiefung mindestens einen Nutenbereich aufweisen. Dabei ist bevorzugt vorgesehen, dass der mindestens eine Nutenbereich mindestens eine Nut aufweist, wobei die mindestens eine Nut im Wesentlichen gerade, besonders bevorzugt entlang der radialen Richtung, ausgeformt ist und wobei in jeweils einer Nut ein Spülmittelauslassbereich angeordnet ist. Dadurch kann das Spülmittel aus einem zentralen Bereich der mindestens einen Vertiefung über gerade Nuten zu einem Spülmittelauslassbereich fließen. Dadurch, dass die Nuten im Wesentlichen gerade ausgeformt sind, ist der Strömungswiderstand gering.

Die Nuten können entlang der radialen Richtung ausgeformt sein. Damit kann ein im Wesentlichen sternförmiges Nutensystem realisiert werden, wobei die Abstände der Drehachse zu einem Spülmittelauslassbereich für alle Spülmittelauslassbereiche ähnlich groß gewählt werden können. Damit kann der Strömungswiderstand gleichmäßig gehalten bleiben.

Es kann vorgesehen sein, dass der mindestens eine Ausgangskanal durch Drehung des mindestens einen Ausgangsteils relativ zum mindestens einen Eingangsteil in kommunikative Verbindung mit dem mindestens einen Nutenbereich der mindestens einen Vertiefung bringbar ist. Insbesondere können durch Drehung verschiedene Nuten des Nutenbereichs ansteuerbar sein. Dadurch kann der mindestens eine Ausgangskanal mit verschiedenen Spülmittelauslassbereichen in kommunikative Verbindung gebracht werden.

In einem besonders bevorzugten Ausführungsbeispiel weist die mindestens eine Ausnehmung mindestens eine im Wesentlichen zylindrische Ausnehmung und mindestens einen Nutenbereich auf, wobei der mindestens eine Nutenbereich radial außerhalb des scheibenförmigen Teils angeordnet ist. In anderen Worten ist damit im Zentrum ein "See" mit Spülmittel angeordnet, in welchem sich Spülmittel ohne großen Strömungswiderstand verteilen kann, und radial außerhalb des Zentrums ein Nutenbereich mit mindestens einer Nut angeordnet, wobei sich in den Nuten vorzugsweise die Spülmittelauslassbereiche befinden.

Die mindestens zwei Eingangskanäle können jeweils einen Eingangskanalauslass in der mindestens einen Kontaktebene aufweisen, wobei ein erster Eingangskanalauslass und ein zweiter Eingangskanalauslass radial außerhalb der zylindrischen Ausnehmung der mindestens einen Vertiefung angeordnet sind und/oder wobei ein erster Eingangskanalauslass auf einer ersten Seite und ein zweiter Eingangsauslass auf einer zweiten Seite von mindestens einer Nut des Nutenbereichs der mindestens einen Vertiefung angeordnet sind. In der mindestens einen Nut kann der Spülmittelauslassbereich angeordnet sein. Fährt nun ein Ausgangskanaleinlass von einer ersten Auswahlstellung, in welcher der Ausgangskanaleinlass mit dem ersten Eingangskanalauslass fluchtet und in kommunikativer Verbindung steht, in eine zweite Auswahlstellung, in welcher der Ausgangskanaleinlass mit dem zweiten Eingangskanalauslass fluchtet und in kommunikativer Verbindung steht, wird vom Ausgangskanaleinlass die mindestens eine Nut mit dem Spülmittelauslassbereich überfahren. Damit wird der Ausgangskanal beim Umschalten zwangsweise gespült.

In einem weiteren, bevorzugten Ausführungsbeispiel berührt der mindestens eine Eingangsteil die mindestens eine Kontaktebene im Bereich von mindestens zwei voneinander isolierten, vorzugsweise runden, Dichtinseln, wobei die mindestens eine Vertiefung im Bereich außerhalb der mindestens zwei Dichtinseln angeordnet ist.

Es kann dabei der mindestens eine Ausgangskanal durch Drehung des mindestens einen Ausgangsteils relativ zum mindestens einen Eingangsteil in kommunikative Verbindung mit der Vertiefung in einem Zwischenraum mindestens zweier Dichtinseln bringbar sein.

Besonders bevorzugt ist vorgesehen, dass mindestens zwei Eingangskanäle jeweils einen Eingangskanalauslass in der mindestens einen Kontaktebene aufweisen, wobei ein erster Eingangskanalauslass an der Oberfläche einer ersten Dichtinsel und ein zweiter Eingangskanalauslass an der Oberfläche einer zweiten Dichtinsel angeordnet sind. Durch Drehung des mindestens einen Ausgangsteils relativ zum mindestens einen Eingangsteil kann also der Ausgangskanal wahlweise auf eine erste oder eine zweite Dichtinsel gedreht werden.

Fährt nun ein Ausgangskanaleinlass von einer ersten Auswahlstellung, in welcher der Ausgangskanaleinlass mit dem ersten Eingangskanalauslass fluchtet und in kommunikativer Verbindung steht, in eine zweite Auswahlstellung, in welcher der Ausgangskanaleinlass mit dem zweiten Eingangskanalauslass fluchtet und in kommunikativer Verbindung steht, wird vom Ausgangskanaleinlass der Zwischenraum mindestens zweier Dichtinseln überfahren. Dort kann demnach der Spülmittelauslass angeordnet sein, womit der Ausgangskanal beim Umschalten zwangsweise gespült wird.

Es kann weiterhin mindestens ein Spülmitteleinlassbereich des Spülmittelreservoirs sein, wobei der Spülmitteleinlassbereich radial weiter innen als der mindestens eine Spülmittelauslassbereich angeordnet ist. Damit fließt im Gebrauch Spülmittel radial von innen nach außen. Bevorzugt ist der mindestens eine Spülmitteleinlassbereich am Ende von mindestens einem Spülmittelkanal angeordnet. Über den Spülmittelkanal kann Spülmittel von außen in das Ventil eingeführt werden.

Der Spülmittelkanal steht mit dem Spülmittelreservoir in kommunikativer Verbindung. Dabei kann vorgesehen sein, dass der mindestens eine Spülmittelkanal im mindestens einen Ausgangsteil angeordnet ist oder im mindestens einen Eingangsteil angeordnet ist oder dass ein Spülmittelkanal in beiden Teilen angeordnet ist. In einer besonders bevorzugten Ausführungsform ist der mindestens eine Spülmittelkanal im mindestens einen Ausgangsteil angeordnet.

Es kann vorgesehen sein, dass das mindestens eine Eingangsteil und/oder das mindestens eine Ausgangsteil an ihren Seitenflächen von Spülmittel umspülbar sind, vorzugsweise wobei zum Bereich außerhalb der Seitenflächen eine kommunikative Verbindung zu mindestens einem Spülmittelkanal und/oder dem Spülmittelreservoir besteht. Dieser Verbindung kann beispielsweise durch eine vom Spülmittelkanal ausgehende Querbohrung, welche in einem Bereich über dem Ausgangsteil mündet, realisiert werden.

Insgesamt ist bevorzugt vorgesehen, dass die mindestens zwei Eingangskanäle jeweils einen Eingangskanalauslass in der mindestens einen Kontaktebene aufweisen und der mindestens eine Ausgangskanal einen Ausgangskanaleinlass in der mindestens einen Kontaktebene aufweist, wobei der mindestens eine Spülmittelauslassbereich jeweils zwischen zwei Eingangskanalauslässen angeordnet ist. Damit wird beim Drehen des Ausgangskanaleinlass von einem ersten Eingangskanalauslass (erste Auswahlstellung) auf einen zweiten Eingangskanalauslass (zweite Auswahlstellung) der mindestens eine Spülmittelauslass passiert, sodass der mindestens eine Ausgangskanal zwingend gespült wird.

Es kann vorgesehen sein, dass die mindestens zwei Eingangskanalauslässe und/oder die Ausgangskanalauslässe in einem einzigen radialen Abstand zur Drehachse angeordnet sind. Damit können die Eingangskanalauslässe und die Ausgangskanalauslässe jeweils aufeinander gedreht werden.

Auch ist typischerweise vorgesehen, dass der mindestens eine erste Eingangskanalauslass und der mindestens eine zweite Eingangskanalauslass in unterschiedlichen Winkelbereichen bezüglich der Drehachse angeordnet sind, wobei der mindestens eine Spülmittelauslassbereich in einem Winkelbereich zwischen dem mindestens einen ersten Eingangskanalauslass und dem mindestens einen zweiten Eingangskanalauslass angeordnet ist.

In einem bevorzugten Ausführungsbeispiel sind mindestens zwei Ausgangskanäle vorgesehen, sodass die mindestens zwei Ausgangskanäle durch Drehung des mindestens einen Ausgangsteils relativ zum mindestens einen Eingangsteil in kommunikative Verbindung mit mindestens zwei Eingangskanälen oder mit mindestens einem Spülmittelauslassbereich des Spülmittelreservoirs bringbar sind.

Besonders bevorzugt sind mindestens vier, insbesondere acht, Eingangskanäle vorgesehen, sodass die mindestens zwei Ausgangskanäle durch Drehung des mindestens einen Ausgangsteils relativ zum mindestens einen Eingangsteil in kommunikative Verbindung mit mindestens zwei der mindestens vier Eingangskanäle oder mit mindestens einem Spülmittelauslassbereich bringbar sind.

In einem Ausführungsbeispiel sind genau zwei Ausgangskanäle vorgesehen, sodass die zwei Ausgangskanäle durch Drehung des mindestens einen Ausgangsteils relativ zum mindestens einen Eingangsteil in kommunikative Verbindung mit zwei Eingangskanälen bringbar sind, wobei sich die zwei Ausgangskanäle besonders bevorzugt in Bezug auf die gedachte Drehachse diametral gegenüberstehen.

Die mindestens zwei Eingangskanäle können jeweils einen Eingangskanalauslass in der mindestens einen Kontaktebene aufweisen und die mindestens zwei Ausgangskanäle können jeweils einen Ausgangskanaleinlass in der mindestens einen Kontaktebene aufweisen, vorzugsweise wobei die mindestens zwei Ausgangskanaleinlässe und/oder die mindestens zwei Eingangskanalauslässe
- um die gedachte Drehachse azimutal gleichverteilt angeordnet sind, und/oder
- im gleichen radialen Abstand von der gedachten Drehachse angeordnet sind.

Auch kann vorgesehen sein, dass mindestens vier Eingangskanäle vorgesehen sind, wobei mindestens zwei erste Eingangskanalauslässe und mindestens zwei zweite Eingangskanalauslässe in unterschiedlichen Winkelbereichen bezüglich der gedachten Drehachse angeordnet sind, wobei jeweils mindestens zwei Spülmittelauslassbereiche in einem Winkelbereich zwischen dem Winkelbereich der mindestens zwei ersten Eingangskanalauslässe und dem Winkelbereich der mindestens zwei zweiten Eingangskanalauslässe angeordnet sind.

Es können parallel mindestens zwei, vorzugsweise genau zwei, Ausgangskanäle so geschaltet werden dass durch die mindestens zwei, vorzugsweise genau zwei, Ausgangskanäle in einer ersten Auswahlstellung jeweils eine Flüssigkeit aus einem Produktbehälter förderbar ist. In einer zweiten Auswahlstellung sind ebenfalls jeweils zwei weitere Flüssigkeiten förderbar. In der Spülstellung werden die mindestens zwei, vorzugsweise genau zwei, Ausgangskanäle gespült.

Die mindestens zwei, vorzugsweise genau zwei, Flüssigkeiten, welche in der ersten Auswahlstellung oder in der zweiten Auswahlstellung förderbar sind, können voneinander verschieden (beispielsweise eine sinnvolle Kombination aus Waschmittel und Weichspüler) oder gleich sein. In letzterem Fall ist der Vorteil eines Parallelbetriebs, dass eine größere Durchflussgeschwindigkeit erreichbar ist. Zudem ist durch die (mindestens) zweikanalige Ausformung ein redundantes System geschaffen, welches beim Ausfall eines Elements eines Kanals, beispielsweise der Pumpe, immer noch einsatzfähig ist.

Der mindestens eine Eingangsteil kann eine Eingangsscheibe aufweisen, wobei die mindestens zwei Eingangskanäle zumindest von einer Seite der Eingangsscheibe auf die andere Seite der Eingangsscheibe führen.

Der mindestens eine Ausgangssteil kann eine Ausgangsscheibe aufweisen, wobei der mindestens eine Ausgangskanal zumindest von einer Seite der Ausgangsscheibe auf die andere Seite der Ausgangsscheibe führt.

Die Ausgangsscheibe und/oder die Eingangsscheibe sind in einem bevorzugten Ausführungsbeispiel aus Glas gefertigt. Dadurch, dass Glas sehr maßhaltig ist, kann eine sehr ebene Kontaktfläche an der Eingangsscheibe und/oder an der Ausgangsscheibe realisiert werden.

Das mindestens eine Eingangsteil und/oder das mindestens eine Ausgangsteil sind in einem bevorzugten Ausführungsbeispiel zumindest im Bereich der Kontaktebene aus Glas gefertigt.

Es kann vorgesehen sein, dass die mindestens zwei Eingangskanäle und/oder der mindestens eine Ausgangskanal zumindest abschnittweise parallel zur gedachten Drehachse angeordnet sind. Insbesondere können die mindestens zwei Eingangskanäle auch in ihrer gesamten Länge parallel zur gedachten Drehachse angeordnet sein.

In einem bevorzugten Ausführungsbeispiel weist das Ventil ein Gehäuse auf, wobei das Gehäuse drehfest mit dem mindestens einen Eingangsteil verbunden ist und wobei der mindestens eine Ausgangsteil drehbar im Gehäuse gelagert ist, oder umgekehrt. Dafür bildet das Gehäuse eine Art Wanne aus, in welchem das mindestens eine Ausgangsteil (oder umgekehrt das mindestens eine Eingangsteil) liegt.

Vorzugsweise ist dabei vorgesehen, dass der mindestens eine Ausgangsteil (oder umgekehrt der mindestens eine Eingangsteil) an seinen Seitenflächen ohne einen Lagerstift im Gehäuse gelagert ist. Durch das Ausbleiben eines Lagerstifts wird es ermöglicht, dass die mindestens eine Vertiefung von der Drehachse durchragt wird.

Das Innere des Gehäuses kann in kommunikativer Verbindung mit dem mindestens einen Spülmittelkanal und/oder mit dem Spülmittelreservoir stehen. Insbesondere können damit auch die Seitenflächen vom mindestens einen Eingangsteil und/oder dem mindestens einen Ausgangsteil umspülbar sein.

Wenn das Innere des Gehäuses in kommunikativer Verbindung mit dem Spülmittelreservoir steht, kann die Verbindung über die mindestens eine Vertiefung bestehen.

Es kann vorgesehen sein, dass das mindestens eine Ausgangsteil und das mindestens eine Eingangsteil mit Kraft aufeinandergedrückt werden, vorzugsweise mittels einer Feder. Damit wird eine Dichtung in der Kontaktebene realisiert.

Es kann eine Antriebsvorrichtung zum Verstellen und Einstellen der relativen Drehposition von dem mindestens einen Eingangsteil zum mindestens einen Ausgangsteil vorgesehen sein, vorzugsweise wobei die mindestens eine Antriebsvorrichtung mittels eines Zahnradsystems und/oder mittels eines Zahnriemens angreift. Damit kann eine Flüssigkeit insbesondere automatisch ausgewählt werden.

Ein erfindungsgemäßes Wäschedosiersystem umfasst ein beschriebenes Ventil zum Auswählen von Flüssigkeiten oder ein Ventil zum Verteilen von Flüssigkeiten.

In einem bevorzugten Ausführungsbeispiel sind die mindestens zwei Eingangskanäle jeweils an einen Produktbehälter zum Lagern einer Flüssigkeit angeschlossen. Dazu sind die Produktbehälter und das Ventil über Leitungen verbunden. Es kann auch vorgesehen sein, dass mehrere Eingangskanäle an einem Produktbehälter angeschlossen sind.

In einem alternativen Ausführungsbeispiel ist der mindestens eine Ausgangskanal an einen Produktbehälter zum Lagern einer Flüssigkeit angeschlossen. Dazu sind der Produktbehälter und das Ventil über Leitungen verbunden. In diesem Fall kann Flüssigkeit vorzugsweise über den mindestens einen Ausgangskanal in das Ventil eintreten und über die mindestens zwei Eingangskanäle austreten.

In einem bevorzugten Ausführungsbeispiel des Wäschedosiersystems ist der mindestens eine Ausgangskanal, vorzugsweise über einen Einspülverteiler, an mindestens einem Waschgerät, insbesondere mindestens einer Waschmaschine und/oder mindestens einem Geschirrspüler, angeschlossen. Als Flüssigkeiten können hier demnach verschiedene Waschmittel, Weichspüler, Klarspüler oder andere Flüssigkeiten vorgesehen sein.

Es kann alternativ vorgesehen sein, dass die mindestens zwei Eingangskanäle, insbesondere über einen Einspülverteiler, jeweils an mindestens einem Waschgerät, insbesondere mindestens einer Waschmaschine und/oder mindestens einem Geschirrspüler, angeschlossen sind. In diesem Fall kann Flüssigkeit vorzugsweise über den mindestens einen Ausgangskanal in das Ventil eintreten und über die mindestens zwei Eingangskanäle austreten.

In einem weiteren Ausführungsbeispiel ist mindestens eine Pumpe stromabwärts des Ventils angeordnet. Die Flüssigkeiten und/oder das Spülmittel werden so mit Unterdruck durch das Ventil gesaugt. Je nach Verwendung des Ventils ist die mindestens eine Pumpe an Leitungen angeordnet, welche mit den mindestens zwei Eingangskanälen oder mit dem mindestens einen Ausgangskanal in kommunikativer Verbindung stehen.

Vorzugsweise sind mindestens zwei, bevorzugt genau zwei, Ausgangskanäle des Ventils vorgesehen und jeweils eine Pumpe in einer Leitung, welche an einen Ausgangskanal anschließt, angeordnet. Es sind also mindestens zwei, bevorzugt genau zwei, Pumpen vorgesehen. Dadurch die doppelte Ausführung kann ein Wäschedosiersystem mit paralleler Förderung von mindestens zwei verschiedenen Flüssigkeiten, mit doppelter Pumpleistung einer Flüssigkeit und/oder ein redundantes System geschaffen werden. Die Flüssigkeit strömt vorzugsweise vom Ausgangskanal zur Pumpe, sodass die Pumpe Flüssigkeit durch das Ventil saugt. Alternativ kann Flüssigkeit aber auch durch das Ventil gedrückt werden.

Es kann auch vorgesehen sein, dass jeweils eine Pumpe in einer Leitung, welche an einen Eingangskanal anschließt, angeordnet ist. Die Flüssigkeit strömt dabei vorzugsweise vom Eingangskanal zur Pumpe, sodass die Pumpe Flüssigkeit durch das Ventil saugt. Alternativ kann Flüssigkeit aber auch durch das Ventil gedrückt werden.

In einem Ausführungsbeispiel ist an den mindestens zwei Eingangskanälen und/oder dem mindestens einen Ausgangskanal jeweils ein flexibler Schlauch angeschlossen, sodass ein Verdrehen des mindestens einen Eingangsteils und/oder des mindestens einen Ausgangsteils zumindest teilweise möglich ist.

Im Wäschedosiersystem ist die Einbaulage des Ventils typischerweise so, dass das mindestens eine Ausgangsteil oben angeordnet ist und das mindestens eine Eingangsteil unten angeordnet ist. Dadurch können die Leitungen, welche an mindestens einem Eingangskanal und an Produktbehältern angeschlossen sind, nach unten weggeführt werden, sodass Flüssigkeiten aus den Produktbehältern nicht ohne Pumpen in das Ventil gelangen können.

Es kann aber umgekehrt auch das mindestens eine Ausgangsteil unten angeordnet sein und das mindestens eine Eingangsteil oben angeordnet sein. Dies ist insbesondere nützlich, wenn das Ventil verkehrt angeschlossen wird, wenn also im Betrieb Flüssigkeit in den Ausgangsteil einströmt und aus dem Eingangsteil ausströmt. So strömen Flüssigkeiten von unten in das Ventil ein, sodass Flüssigkeiten nicht ohne pumpen in das Ventil gelangen können.

Es kann weiterhin vorgesehen sein, dass der mindestens eine Spülmittelkanal über eine Spülmittelleitung an mindestens einen Frischwasseranschluss, vorzugsweise mittels einer Rohrtrenneinrichtung, anschließbar ist. Als Spülmittel kann in diesem bevorzugten Fall Frischwasser verwendet werden. Die Rohrtrenneinrichtung kann über einen Frischwasserbehälter ausgebildet sein, wobei Wasser über eine Fallstrecke in vom Frischwasseranschluss in den Frischwasserbehälter gelangen kann.

Ein Verfahren zum Auswählen von Flüssigkeiten mit einem Ventil weist die folgenden, vorzugsweise chronologisch durchgeführten, Verfahrensschritte auf:
- Drehung des mindestens einen Ausgangsteils relativ zum mindestens einen Eingangsteil in eine erste Auswahlstellung, wobei in der ersten Auswahlstellung mindestens ein erster Eingangskanal der mindestens zwei Eingangskanäle mit dem mindestens einen Ausgangskanal in kommunikativer Verbindung steht,
- Drehung des mindestens einen Ausgangsteils relativ zum mindestens einen Eingangsteil in eine Spülstellung, wobei in der Spülstellung das Spülmittelreservoir mit dem mindestens einen Ausgangskanal in kommunikativer Verbindung steht,
- Drehung des mindestens einen Ausgangsteils relativ zum mindestens einen Eingangsteil in eine zweite Auswahlstellung, wobei in der zweiten Auswahlstellung mindestens ein zweiter Eingangskanal der mindestens zwei Eingangskanäle mit dem mindestens einen Ausgangskanal in kommunikativer Verbindung steht.

Weiterhin können die folgenden Verfahrensschritte vorgesehen sein, wobei
- in der ersten Auswahlstellung mindestens zwei, vorzugsweise genau zwei, erste Eingangskanäle mit mindestens zwei, vorzugsweise genau zwei, Ausgangskanälen in kommunikativer Verbindung stehen,
- in der Spülstellung das Spülmittelreservoir mit mindestens zwei, vorzugsweise genau zwei, Ausgangskanälen in kommunikativer Verbindung steht,
- in der zweiten Auswahlstellung mindestens zwei, vorzugsweise genau zwei, zweite Eingangskanäle mit mindestens zwei, vorzugsweise genau zwei, Ausgangskanälen in kommunikativer Verbindung stehen.

Weitere Ausführungsbeispiele und Details sind den Figuren zu entnehmen. Dabei zeigen:
- Fig. 1: Ventil in einer perspektivischen Oberansicht
- Fig. 2: Ventil in einer perspektivischen Unteransicht
- Fig. 3: Ventil in einer ersten Querschnittansicht
- Fig. 4: Ventil in einer zweiten Querschnittansicht
- Fig. 5a: unterer Gehäuseteil des Ventils in einer perspektivischen Oberansicht
- Fig. 5b: unterer Gehäuseteil des Ventils in einer perspektivischen Unteransicht
- Fig. 6a: Eingangsscheibe in einer perspektivischen Oberansicht
- Fig. 6b: Eingangsscheibe in einer perspektivischen Unteransicht
- Fig. 6c: Eingangsscheibe in einer Draufsicht
- Fig. 6d: Eingangsscheibe in einer Unteransicht
- Fig. 7a: alternative Eingangsscheibe in einer perspektivischen Oberansicht
- Fig. 7b: alternative Eingangsscheibe in einer perspektivischen Unteransicht
- Fig. 7c: alternative Eingangsscheibe in einer Draufsicht
- Fig. 7d: alternative Eingangsscheibe in einer Unteransicht
- Fig. 8a: Ausgangsscheibe in einer perspektivischen Oberansicht
- Fig. 8b: Ausgangsscheibe in einer perspektivischen Unteransicht
- Fig. 8c: Ausgangsscheibe in einer Draufsicht
- Fig. 8d: Ausgangsscheibe in einer Unteransicht
- Fig. 9a: Ausgangsteil des Ventils in einer perspektivischen Oberansicht
- Fig. 9b: Ausgangsteil des Ventils in einer perspektivischen Unteransicht
- Fig. 10: Anwendung des Ventils in einem Wäschedosiersystem
- Fig. 11: alternative Anwendung des Ventils in einem Wäschedosiersystem

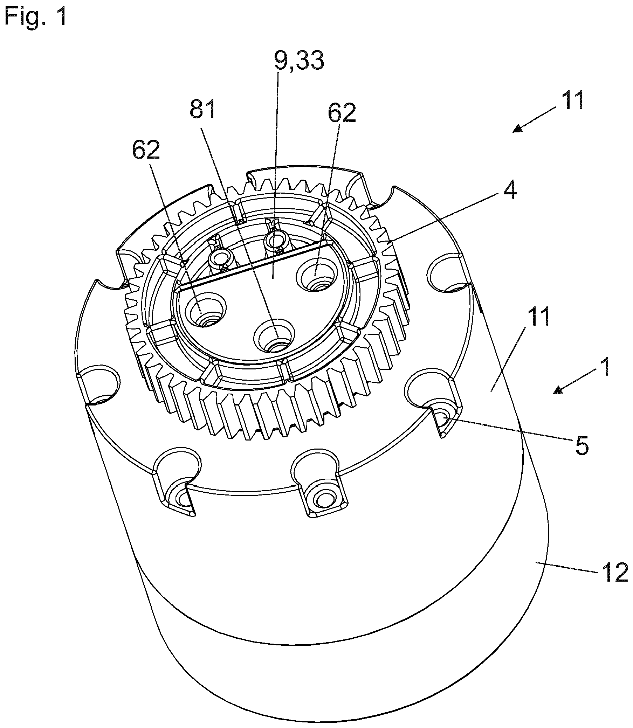

Die Fig. 1 zeigt ein Ventil 11 in einer perspektivischen Oberansicht. In der Fig. 1 ersichtlich ist das Gehäuse 1, welches einen oberen Gehäuseteil 11 und einem unteren Gehäuseteil 12 aufweist. Die beiden Gehäuseteile 11 und 12 können über nicht dargestellte Befestigungsmittel, welche durch Befestigungslöcher 5 geführt werden können, aneinander fixiert werden.

Im oberen Gehäuseteil 11 ist eine Ausnehmung angeordnet, durch welche ein Teil des Ausgangsteils 9, insbesondere des Drehkerns 33, ragt. Im Ausgangsteil 9 sind zwei Ausgangskanäle 6 und ein Spülmittelkanal 8 angeordnet, wobei die zwei Ausgangskanalauslässe 62 und der Spülmittelkanaleinlass 81 in der Fig. 1 ersichtlich sind.

An die Ausgangskanalauslässe 62 kann eine Leitung montiert werden. Die Leitungen sind vorzugsweise als ein flexibler Schlauch ausgeformt, womit ein Verdrehen des Ausgangsteil 9 zumindest bis zu einem gewissen Grad ermöglicht wird.

Das Ausgangsteil 9 ist drehbar im Gehäuse 1 gelagert, wobei durch das Drehen des Ausgangsteils 9 verschiedene Eingangskanäle 7 angewählt werden können. Das Drehen des Ausgangsteils 9 kann mittels einer Antriebsvorrichtung zum Verstellen und Einstellen der relativen Drehposition von dem mindestens einen Eingangsteil 10 zum mindestens einen Ausgangsteil 9 vorgesehen ist. Die Antriebsvorrichtung kann mittels eines Zahnradsystems und/oder mittels eines Zahnriemens am Ausgangsteil 9 angreifen. In der Fig. 1 ist nur das Zahnrad 4, welches drehfest mit dem Ausgangsteil 9 verbunden ist, gezeigt.

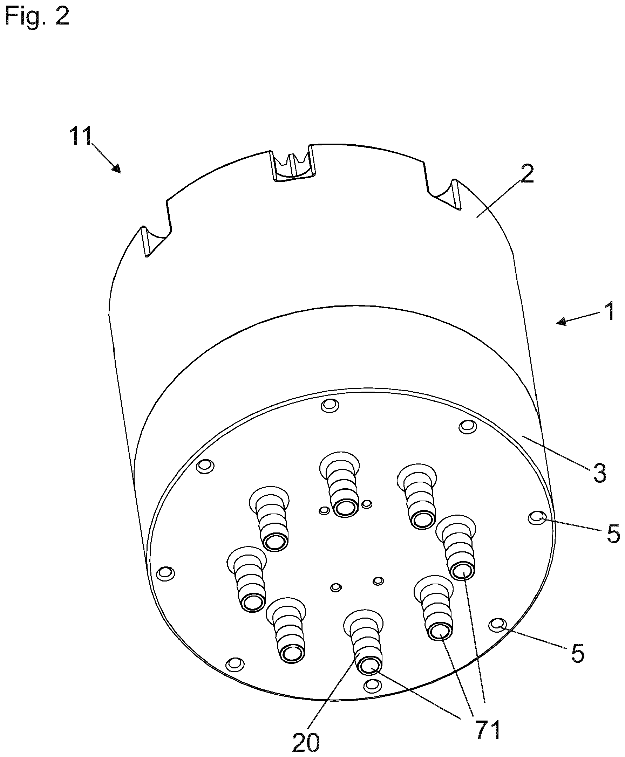

Die Fig. 2 zeigt eine perspektivische Unteransicht des Ventils 11. An der Unterseite des Ventils 11 im unteren Gehäuseteil 3 sind acht Stutzen 20 angeordnet. Die Stutzen 20 sind im gleichen radialen Abstand zu einer gedachten Drehachse des Ausgangsteils 9 angeordnet.

An den Enden der Stutzen 20 sind die Eingangskanaleinlässe 71 angeordnet. An den Eingangskanaleinlässen 71 können Leitungen angebracht werden, welche die Eingangskanäle 7 mit Produktbehältern verbinden. In den Produktbehältern können verschiedene Flüssigkeiten, welche durch das Ventil 11 auswählbar sein sollen, aufbewahrt werden.

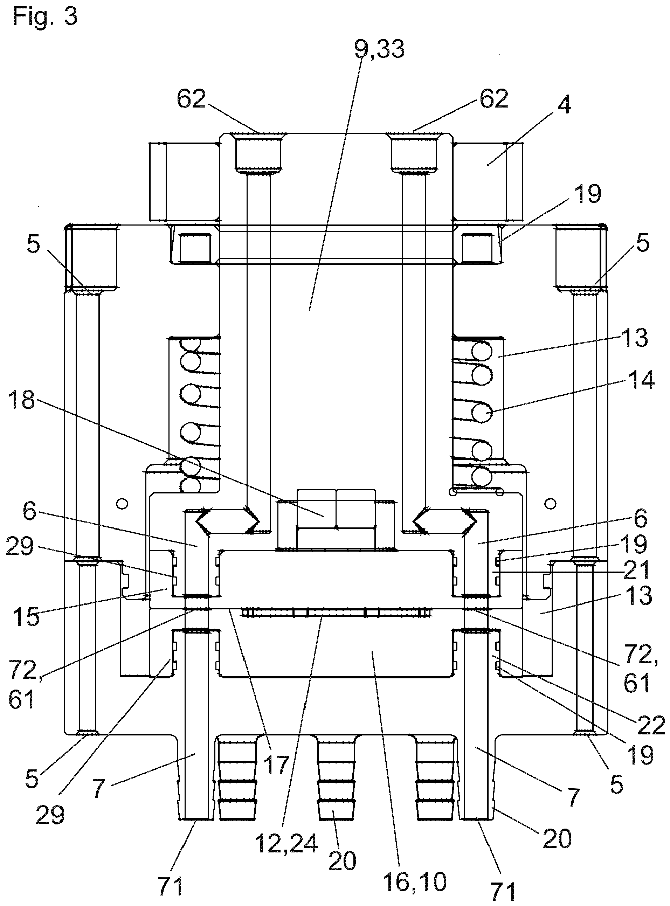

Die Fig. 3 zeigt einen Querschnitt des Ventils 11. In dieser Drehposition des Ausgangsteils 9 relativ zum Eingangsteil 10 sind jene beiden Eingangskanäle 7, welche im Querschnitt ersichtlich sind, mit den zwei Ausgangskanälen 6 in eine kommunikative Verbindung gebracht. So kann eine Flüssigkeit vom jeweiligen Eingangskanaleinlass 71 zum korrespondierenden Ausgangskanalauslass 62 durch das Ventil 11 geleitet werden.

Die Eingangskanäle 7 sind parallel zu einer gedachten Drehachse des Ausgangsteils 9 ausgerichtet. Die Ausgangskanäle 6 sind zumindest abschnittweise parallel zu einer gedachten Drehachse des Ausgangsteils 9 ausgerichtet. Ein Zwischenabschnitt des Ausgangsteils 9 ist in radialer Richtung angeordnet, sodass die Ausgangskanaleinlässe 61 radial weiter außen als die Ausgangskanalauslässe 62 angeordnet sind.

Der Eingangsteil10 weist eine Eingangsscheibe 16 auf, wobei die insgesamt acht Eingangskanäle 7 zumindest von einer Seite der Eingangsscheibe 16 auf die andere Seite der Eingangsscheibe 16 führen.

Der Ausgangssteil 9 weist eine Ausgangsscheibe 15 auf, wobei der mindestens eine Ausgangskanal 6 zumindest von einer Seite der Ausgangsscheibe 15 auf die andere Seite der Ausgangsscheibe 15 führt.

Die Ausgangsscheibe 15 und die Eingangsscheibe 16 sind vorzugsweise aus Glas gefertigt, welches sich durch seine Härte, Maßhaltigkeit und glatte Oberfläche auszeichnet. Es sind jedoch auch andere Materialien wie Keramik oder Kunststoff denkbar.

Die Ausgangsscheibe 15 ist mit dem Drehkern 33 drehfest verbunden, sodass eine Drehung des Drehkerns 33 eine Drehung der Ausgangsscheibe 15 bedingt. Insbesondere weist der Drehkern 33 drei Fortsätze 21 auf, wobei in jedem Fortsatz 21 ein Ausgangskanal 6 oder ein Spülmittelkanal 8 angeordnet ist. Die Ausgangsscheibe 15 weist verbeiterte Bohrungen 29 auf, in welche die Fortsätze 21 eingebracht werden können. Um die Fortsätze 21 sind Dichtringe 19 angeordnet, welche einen Ausgangskanal 6 oder einen Spülmittelkanal 8 abdichten.

Die Eingangsscheibe 16 ist mit dem unteren Gehäuseteil 3 drehfest verbunden, sodass die Eingangsscheibe 16 nicht drehbar ist. Insbesondere weist der untere Gehäuseteil 3 acht Fortsätze 22 auf, wobei in jedem Fortsatz 22 ein Eingangskanal 7 angeordnet ist. Die Eingangsscheibe 16 weist verbreiterte Bohrungen 29 auf, in welche die Fortsätze 22 eingebracht werden können. Um die Fortsätze 22 sind Dichtringe 19 angeordnet, welche einen Eingangskanal 7 abdichten.

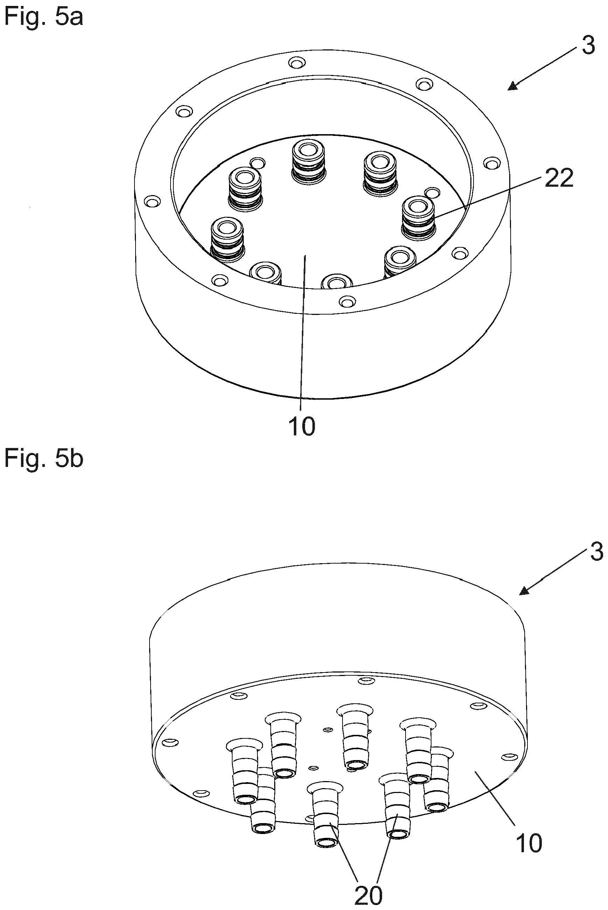

Die Fortsätze 22 am Eingangsteil 10, insbesondere am unteren Gehäuseteil 3 sind gut in der Fig. 5a ersichtlich, welche eine perspektivische Ansicht des unteren Gehäuseteils 3 ohne die Eingangsscheibe 16 zeigt. In der Fig. 5b sind die Stutzen 20, in welchen die Eingangskanäle 7 verlaufen, gut ersichtlich.

Ausgangsscheibe 15 und Eingangsscheibe 16 liegen in einer Kontaktebene 17 aneinander dichtend an. Durch eine Drehung der Ausgangsscheibe 15 relativ zur Eingangsscheibe 16 können die Ausgangskanäle 6 in kommunikative Verbindung mit jeweils zwei Eingangskanälen 7 oder mit mindestens einem Spülmitteleinlassbereich 32 des Spülmittelreservoirs 12 gebracht werden.

Um eine Dichtung zwischen Ausgangsscheibe 15 und Eingangsscheibe 16 zu gewährleisten, ist eine Feder 14 vorgesehen, welche die Ausgangsscheibe 15 auf die Eingangsscheibe 16 presst.

Die Drehposition des Ausgangsteils 9 kann mithilfe eines Magneten 18 bestimmt werden, wobei der Magnet 18 im Ausgangsteil 9 angeordnet ist.

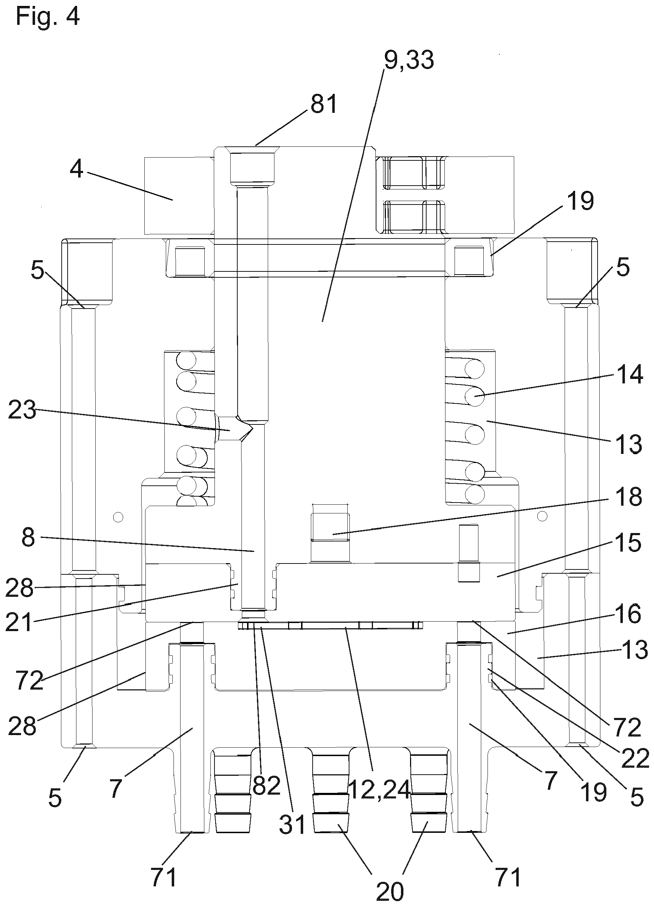

Die Fig. 4 zeigt einen Querschnitt des Ventils 11, wobei der Schnitt um 90° gegenüber jenem aus Fig. 3 gedreht ist. Die Drehstellung ist aber die gleiche wie in Fig. 3.

In dieser Ansicht sind ebenfalls zwei Eingangskanäle 7 im Schnitt ersichtlich. Diese zwei Eingangskanäle 7 stehen jedoch nicht in einer kommunikativen Verbindung mit einem Ausgangskanal 6.

Dagegen ist im Schnitt der Spülmittelkanal 8 im Ausgangsteil 9 ersichtlich. Der Spülmittelkanal 8 weist am oberen Ende des Ausgangsteils 9, insbesondere des Drehkerns 33, eine Spülmitteleinlassöffnung 81 auf.

Die Spülmitteleinlassöffnung 81 kann, vorzugsweise über einen flexiblen Schlauch, an einen Frischwasseranschluss angeschlossen werden. Zwischen den Frischwasseranschluss und das Ventil 11 kann eine Rohrtrenneinrichtung geschaltet werden, sodass das Frischwassernetz nicht von Flüssigkeiten aus dem Ventil 11 verschmutzt werden kann.

Dadurch, dass der Spülmittelkanal 6 im Ausgangsteil 9 angeordnet ist, ist die Spülmitteleinlassöffnung 81 in einer bevorzugten Gebrauchslage des Ventils 11, in welcher das Ausgangsteil 9 oben und das Eingangsteil 10 unten angeordnet ist, an der Oberseite des Ventils 11 angeordnet. Damit kann das Spülmittel nur mit dem hydrostatischen Druck im Ventil 11 "stehen", wobei die Leitung ohne viele Kurven nach oben führen können.

Am unteren Ende des Ausgangsteils 9, insbesondere an der Ausgangsscheibe 15, weist der Spülmittelkanal 8 eine Spülmittelauslassöffnung 82 auf. Über die Spülmittelauslassöffnung 82 kann Spülmittel in einen Spülmitteleinlassbereich 31 des Spülmittelreservoirs 12 gelangen.

Das Spülmittelreservoir 12 ist als eine relativ zur mindestens einen Kontaktebene versetzte Vertiefung 24 im Eingangsteil 10, insbesondere in der Eingangsscheibe 16, ausgebildet. Die gedachte Drehachse des Ausgangsteils 9 verläuft durch die Vertiefung 24, das heißt, die Vertiefung 24 ist zentral angeordnet.

Da die Drehstellung in den Figuren 3 und 4 nicht einer Spülstellung entspricht, besteht keine kommunikative Verbindung zwischen dem Spülmittelreservoir 12 und den Ausgangskanälen 6.

Der Spülmittelkanal 8 weist zudem eine Querbohrung 23 auf, wobei der Spülmittelkanal 8 durch die Querbohrung 23 in kommunikative Verbindung mit dem Inneren 13 des Gehäuses 1 gebracht wird. Im Gebrauch fließt damit Spülmittel auch in das Innere 13 des Gehäuses 1 und "steht" unter hydrostatischem Druck im gesamten Ventil 11, wenn das Ventil 11 nicht in einer Spülstellung ist.

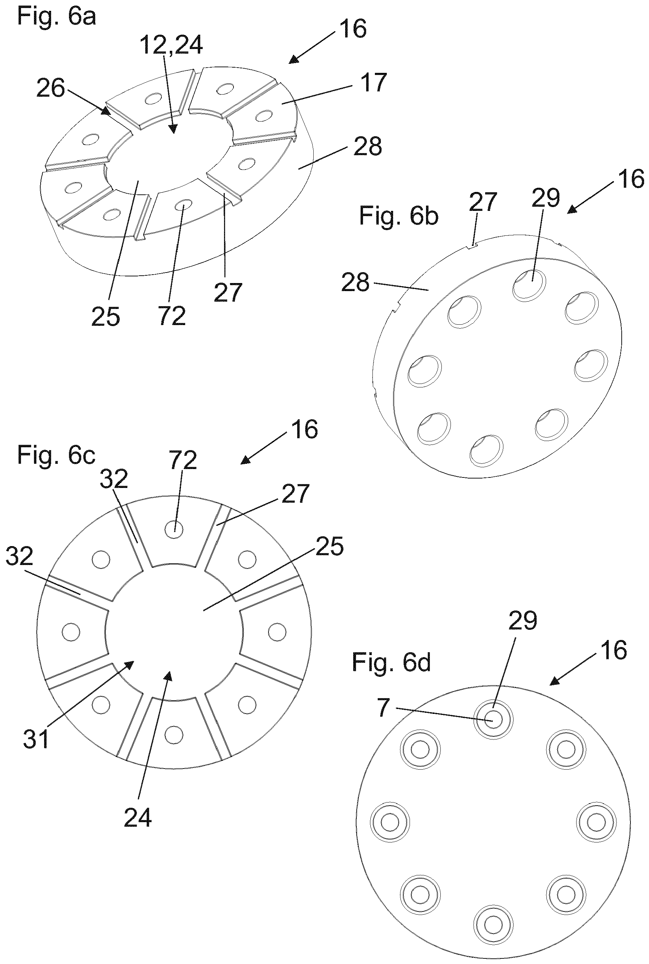

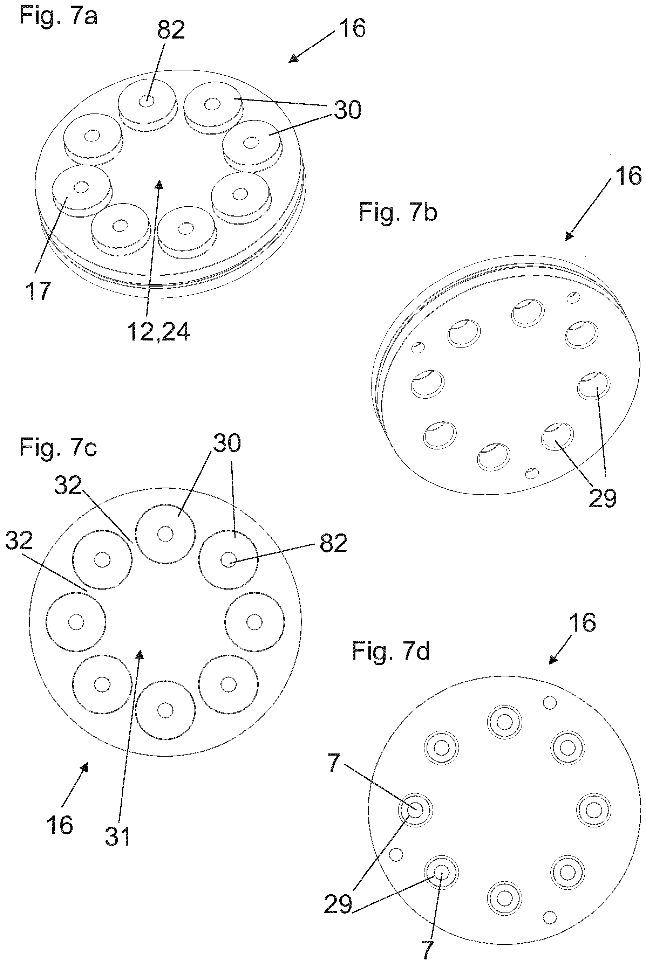

Das Innere 13 des Gehäuses 13 steht zudem in kommunikativer Verbindung mit dem Spülmittelreservoir 12, wobei dies in den Schnitten der Figuren 3 und 4 nicht ersichtlich ist. Hierzu wird auf die Figuren 6a-d und 7a-d verwiesen, welche die Form des Spülmittelreservoirs 12 und der Vertiefung 14 offenbaren.

So können auch die Seitenflächen 28 der Eingangsscheibe 16 und der Ausgangsscheibe 15 mit Spülmittel umgeben werden.

Das Innere 13 des Gehäuses 1 wird nach oben hin durch einen großen Dichtring 19 abgedichtet, wobei der Dichtring 19 um den Drehkern 33 angeordnet ist.

Die Figuren 6a-d und 7a-d zeigen zwei verschieden Ausführungsbeispiele einer Eingangsscheibe 16 in verschiedenen Ansichten. In beiden Ausführungsbeispielen wird das Spülmittelreservoir 12 durch eine relativ zur Kontaktfläche 17 versetzte Vertiefung 24 ausgebildet.

Die Eingangsscheibe 16 der Figuren 6a-d weist eine Vertiefung 24 in der Mitte eine im Wesentlichen zylindrische Ausnehmung 25 auf, wobei eine gedachte Drehachse des Ausgangsteils durch die zylindrische Ausnehmung 25 verläuft. Insbesondere verläuft die gedachte Drehachse durch die Mittelachse der zylindrischen Ausnehmung 25 verläuft. Damit kann sich in der Mitte der Eingangsscheibe 16 ein "See" aus Spülmittel bilden, wobei sich das Spülmittel im "See" leicht verteilen lässt.

Radial außerhalb der zylindrischen Ausnehmung 25 weist die Vertiefung 24 einen Nutenbereich 26 auf. Der Nutenbereich 26 weist wiederrum mehrere, insbesondere acht, Nuten 27 auf, wobei Nuten 27 im Wesentlichen gerade ausgeformt und entlang der radialen Richtung ausgerichtet sind.

In jeweils einer Nut 27 ist ein Spülmittelauslassbereich 32 angeordnet. In einer Spülstellung des Ventils 11 wäre über dem Spülmittelauslassbereich 32 ein Ausgangskanaleinlass 61 angeordnet.

Die Ausgangskanäle 6 können also durch Drehung des Ausgangsteils 9 relativ zum mindestens einen Eingangsteil 10 in kommunikative Verbindung mit dem Nutenbereich 26 der mindestens einen Vertiefung 24 gebracht werden.

Ebenso sind die acht Eingangskanalauslässe 72 ersichtlich, wobei diese radial außerhalb der zylindrischen Ausnehmung 25 angeordnet sind. Insbesondere sind die acht Eingangskanalauslässe 72 jeweils zwischen zwei Nuten 27 des Nutenbereichs 26 angeordnet.

In anderen Worten sind ist zwischen zwei Eingangskanalauslässen 72 jeweils eine Nut 27 angeordnet, sodass bei einem Umschalten von einer ersten Auswahlstellung, in welcher die Ausgangskanäle 6 in kommunikativer Verbindung mit zwei ersten, gegenüberliegenden Eingangskanalauslässen 72 stehen, in eine zweite Auswahlstellung, in welcher die Ausgangskanäle 6 in kommunikativer Verbindung mit zwei zweiten, gegenüberliegenden Eingangskanalauslässen 72 stehen, zwangsweise eine Spülung der Ausgangskanäle 6 stattfindet.

An der Unterseite der Eingangsscheibe 16 sind für jeden Eingangskanal 7 verbreiterte Bohrungen 29 vorgesehen, wobei die Fortsätze 22 des unteren Gehäuseteils 3 in die verbreiterten Bohrungen 29 einbringbar sind.

Ein alternatives Ausführungsbeispiel eines Eingangsteils 10, insbesondere einer Eingangsscheibe 16, ist in den Figuren 7a-d gezeigt. Hier berührt das Eingangsteil 10, insbesondere die Eingangsscheibe 16, die Kontaktebene 17 im Bereich von mindestens zwei, insbesondere acht, voneinander isolierten, runden, Dichtinseln 30, wobei die Vertiefung 24 im Bereich außerhalb der Dichtinseln 30 angeordnet ist.

Es sind die acht Eingangskanalauslässe 72 ersichtlich, wobei diese jeweils an der Oberfläche einer Dichtinsel 30 angeordnet sind.

Die Ausgangskanäle 6 können durch Drehung des mindestens einen Ausgangsteils 9 relativ zum mindestens einen Eingangsteil 10 in kommunikative Verbindung mit der Vertiefung 24 in einem Zwischenraum mindestens zweier Dichtinseln 30 bringbar sein. In diesem Zwischenraum ist demnach ein Spülmittelauslassbereich 32 angeordnet.

Bei einem Umschalten von einer ersten Auswahlstellung, in welcher die Ausgangskanäle 6 in kommunikativer Verbindung mit zwei ersten, gegenüberliegenden Eingangskanalauslässen 72 stehen, in eine zweite Auswahlstellung, in welcher die Ausgangskanäle 6 in kommunikativer Verbindung mit zwei zweiten, gegenüberliegenden Eingangskanalauslässen 72 stehen, findet demnach zwangsweise eine Spülung der Ausgangskanäle 6 statt.

Die Vertiefung 24 ist in den Ausführungsbeispielen der Fig. 6a-d und der Fig. 7a-d so ausgeformt ist, dass eine auf die gedachte Drehachse orthogonale, gedachte Gerade zwischen dem mindestens einen Spülmittelauslassbereich 32 und der gedachten Drehachse vollständig in der mindestens einen Vertiefung 24 angeordnet ist.

Durch diese "sternförmige" Ausführung der Vertiefung 24 kann das Spülmittel ohne großen Strömungswiderstand von einem zentralen Bereich (dem "See" in der Mitte) zu den Spülmittelauslassbereichen 32 gesaugt oder gedrückt werden.

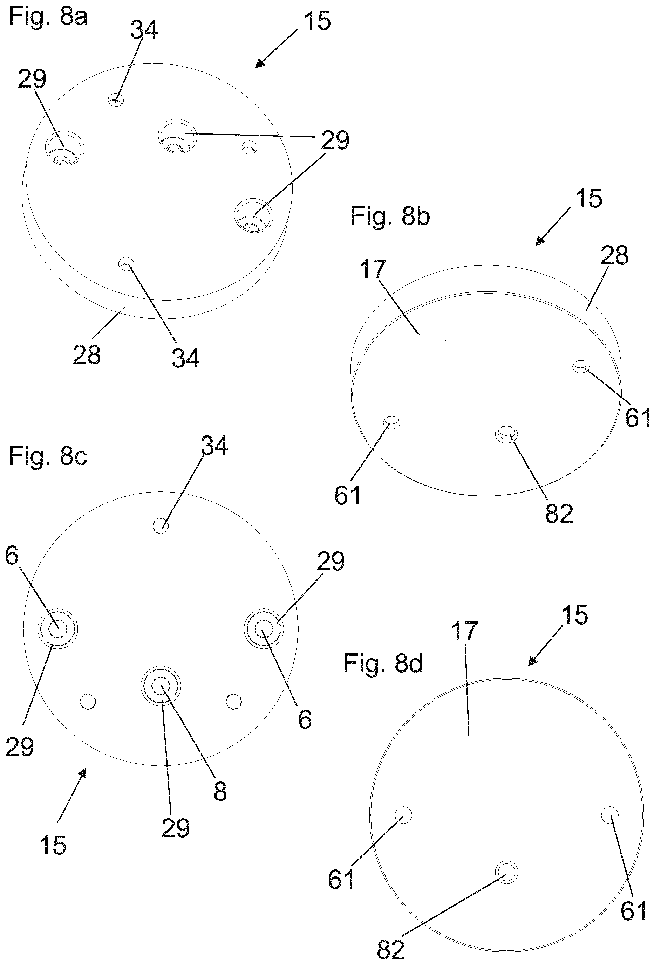

Die Figuren 8a-d zeigen eine Ausgangsscheibe 15, welche in Gebrauchslage mit der Unterseite (siehe Fig. 8b und Fig. 8d) an der Oberseite der Eingangsscheibe 16 in einer Kontaktebene 17 anliegt.

In der Unterseite ersichtlich sind zwei Ausgangskanaleinlässe 61 und ein Spülmittelkanalauslass 82. Abgesehen davon ist die Unterseite der Ausgangsscheibe 15 flach ausgebildet.

Die Ausgangskanaleinlässe 61 können, wie vorher beschrieben, durch Drehung des Ausgangsteils 9 samt der Ausgangsscheibe 15 in kommunikative Verbindung mit Eingangskanalauslässen 72 oder Spülmittelauslassbereichen 32 gebracht werden.

Der Spülmittelkanalauslass 82 ist radial weiter innen als die Ausgangskanaleinlässe 61 angeordnet. Insbesondere mündet der Spülmittelkanalauslass 82 in die zylindrische Ausnehmung 25 der Vertiefung 24 in der Eingangsscheibe 16.

An der Oberseite der Ausgangsscheibe 15 sind für die Ausgangskanäle 6 und den Spülmittelkanal 8 verbreiterte Bohrungen 29 vorgesehen, wobei die Fortsätze 21 des Drehkerns 33 in die verbreiterte Bohrung 29 einbringbar sind.

Zudem sind an der Oberseite der Ausgangsscheibe 15 Bohrungen 34 vorgesehen, in welche am Drehkern 33 angeordnete Stifte eingreifen können. Somit kann die Ausgangsscheibe 15 drehfest mit dem Drehkern 33 verbunden werden, womit insgesamt das Ausgangsteil 9 gebildet wird. Eine Befestigung in die Richtung entlang der gedachten Drehachse ist nicht unbedingt notwendig, da die Ausgangsscheibe 15 ohnehin auf die Eingangsscheib 16 gedrückt wird.

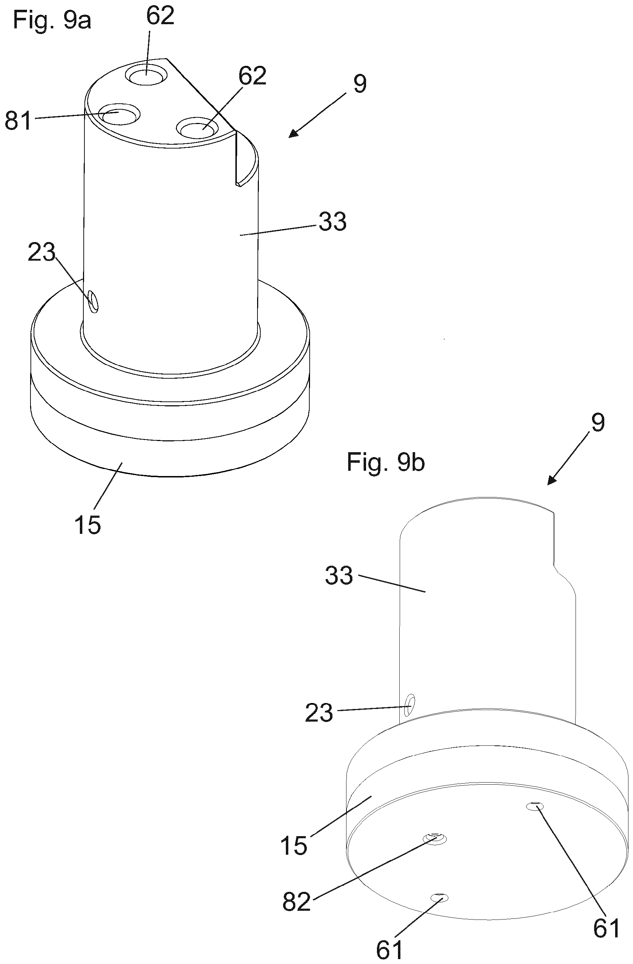

Die Figuren 9a und 9b zeigen das Ausgangsteil 9, umfassend den Drehkern 33 und die Ausgangsscheibe 15, in Isolation. An der Oberseite des Ausgangsteils 9 sind die Ausgangskanalauslässe 62 und der Spülmittelkanaleinlass 81 ersichtlich. Ebenso ist an der Seite des Drehkerns die Querbohrung 23 ersichtlich, welche in kommunikativer Verbindung mit dem Spülmittelkanal 8 steht.

In der perspektivischen Unteransicht sind die zu den Figuren 8a-d diskutierten Ausgangskanaleinlässe 61 und der Spülmittelkanalauslass 82 ersichtlich.

Der Ausgangskanal 6 und der Spülmittelkanal 8 führen also von der einen Seite des Ausgangsteils 9 auf die andere Seite des Ausgangsteils 9. Insbesondere weisen die Kanäle keine U-Form auf, sodass die Strömungsrichtung nicht umgekehrt wird.

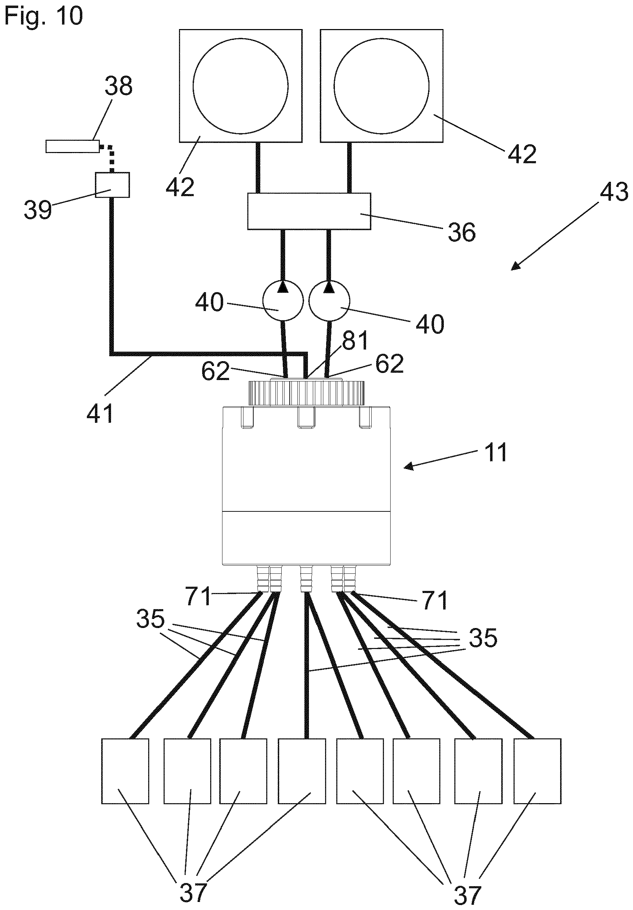

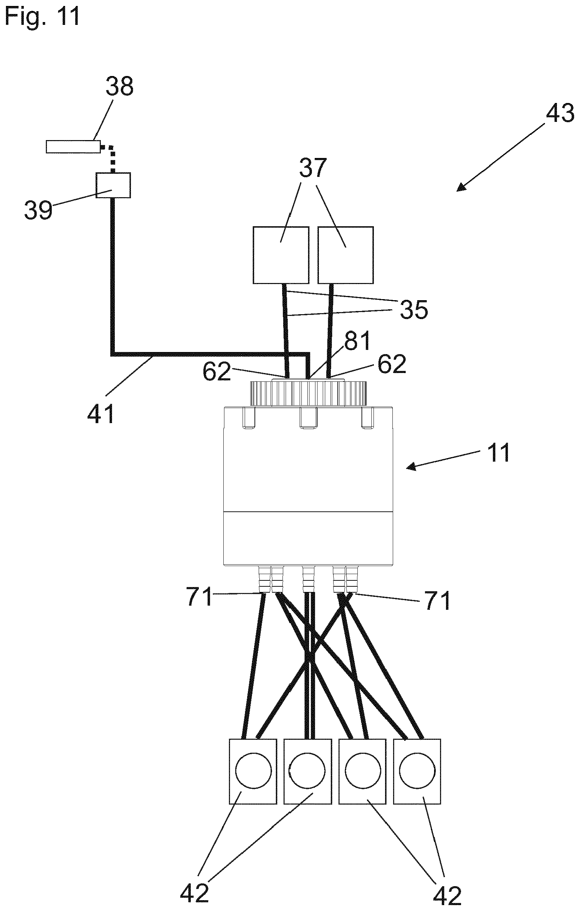

Die Fig. 10 und die Fig. 11 zeigen jeweils ein Wäschedosiersystem 43 mit einem Ventil 11.

In der Fig. 10 führen Leitungen 35 von Produktbehältern 37 zum Ventil 11. Für einen Produktbehälter 37 ist jeweils eine Leitung 35 vorgesehen. Die Leitungen 35 sind jeweils an einem Eingangskanaleinlass 71 angeschlossen. Wie in den anderen Figuren sind vorzugsweise acht Eingangskanaleinlässe 71 und Leitungen 35 vorgesehen.

An der Seite, welcher den Eingangskanaleinlässen 71 gegenüberliegt, sind zwei Ausgangskanalauslässe 62 angeordnet. Von den Ausgangskanalauslässen 62 führt wieder jeweils eine Leitung zu einer Pumpe 40. In der Fig. 10 sind also zwei Pumpen vorgesehen. Dadurch wird die Flüssigkeit unabhängig von zwei Pumpen gefördert, wodurch ein redundantes System oder ein System mit doppelter Fördermenge geschaffen wird. Die Pumpen 40 in der Fig. 10 werden so betrieben, dass Flüssigkeit durch das Ventil 11 gesaugt wird.
Von den Pumpen 40 führen Leitungen weiter in einen Einspülverteiler 36. In den Leitungen können weiterhin auch Ventile, beispielsweise Rückschlagventile, angeordnet sein.

Vom Einspülverteiler 36 kann die Flüssigkeit weiter zu den Waschgeräten 42 geleitet werden. Als Waschgerät 42 kann beispielsweise eine Waschmaschine oder Geschirrspüler vorgesehen sein.

Zudem ist ein Frischwasseranschluss 38 gezeigt, welcher über eine Rohrtrenneinrichtung 39 und eine Spülmittelleitung 41 an den Spülmitteleingang 81 des Ventils 11 angeschlossen ist. Die Rohrtrenneinrichtung 39 kann über einen Frischwasserbehälter ausgebildet sein, wobei Wasser über eine Fallstrecke vom Frischwasseranschluss 38 in den Frischwasserbehälter gelangen kann. Ein Rückfließen von Flüssigkeiten in das Wassernetz ist damit ausgeschlossen.

In der Fig. 10 wird das Ventil 11 als Sammelventil benutzt: Aus acht Flüssigkeiten können jeweils Paare von Flüssigkeiten ausgewählt werden.

Die Fig. 11 zeigt eine alternative Verwendung des Ventils 11, wobei hier das Ventil im Gegensatz zur Fig. 10 umgekehrt angeschlossen ist. Die Produktbehälter 37 führen hier über Leitungen 35 zu den Ausgangskanalauslässen 62.

In der Fig. 11 führen jeweils zwei Leitungen von diametral gegenüberliegenden Eingangskanaleinlässen 71 (welche als Flüssigkeitsauslässe fungieren) zu einem Waschgerät 42. So kann je nach Drehstellung des Ventils 11 ein Waschgerät 42 mit Flüssigkeiten (beispielsweise Waschmittel) versorgt werden.

Enthalten die zwei Produktbehälter 37 verschiedene Flüssigkeiten, können einem Waschgerät 42 zwei Flüssigkeiten zugeführt werden. Enthalten die Produktbehälter 37 die gleiche Flüssigkeit, kann ein redundantes System geschaffen werden. Ein Einspülverteiler 36 wie in Fig. 10 ist so nicht mehr nötig.

Wie auch in Fig. 10 sind zudem Pumpen zum Fördern der Flüssigkeiten vorgesehen, wobei diese aus Übersichtlichkeitsgründen in der Fig. 11 nicht eingezeichnet sind. Vorzugsweise sind diese Pumpen zwischen dem Ventil 11 und den Waschgeräten 42 angeordnet und saugen die Flüssigkeiten durch das Ventil 11.

In der Fig. 11 wird das Ventil 11 also als Verteilerventil benutzt. Von nur zwei Produktbehältern 37 können Flüssigkeiten auf mehrere, insbesondere vier, Waschgeräte 42 verteilt werden.

### Bezugszeichenliste

- 1: Gehäuse
- 2: oberer Gehäuseteil
- 3: unterer Gehäuseteil
- 4: Zahnrad
- 5: Befestigungslöcher
- 6: Ausgangskanal
- 61: Ausgangskanaleinlass
- 62: Ausgangskanalauslass
- 7: Eingangskanal
- 71: Eingangskanaleinlass
- 72: Eingangskanalauslass
- 8: Spülmittelkanal
- 81: Spülmittelkanaleinlass
- 82: Spülmittelkanalauslass
- 9: Ausgangsteil
- 10: Eingangsteil
- 11: Ventil
- 12: Spülmittelreservoir
- 13: Inneres des Gehäuses
- 14: Feder
- 15: Ausgangsscheibe
- 16: Eingangsscheibe
- 17: Kontaktebene
- 18: Magnet
- 19: Dichtring
- 20: Stutzen
- 21: Fortsatz am Ausgangsteil
- 22: Fortsatz am Eingangsteil
- 23: Querbohrung
- 24: Vertiefung
- 25: zylindrische Ausnehmung
- 26: Nutenbereich
- 27: Nut
- 28: Seitenfläche
- 29: verbreiterte Bohrung
- 30: Dichtinsel
- 31: Spülmitteleinlassbereich
- 32: Spülmittelauslassbereich
- 33: Drehkern
- 34: Bohrungen an Ausgangsscheibe
- 35: Leitung
- 36: Einspülverteiler
- 37: Produktbehälter
- 38: Frischwasseranschluss
- 39: Rohrtrenneinrichtung
- 40: Pumpe
- 41: Spülmittelleitung
- 42: Waschgerät
- 43: Wäschedosiersystem

## Patentansprüche

1. Ventil (11) zum Auswählen von Flüssigkeiten umfassend
- mindestens einen Eingangsteil (10), wobei im mindestens einen Eingangsteil (10) mindestens zwei Eingangskanäle (7) vorgesehen sind, und
- mindestens einen Ausgangsteil (9), wobei im mindestens einen Ausgangsteil (9) mindestens ein Ausgangskanal (6) vorgesehen ist, und
- ein Spülmittelreservoir (12),
wobei der mindestens eine Eingangsteil (10) und der mindestens eine Ausgangsteil (9) miteinander, zumindest bereichsweise dichtend, in mindestens einer Kontaktebene (17) kontaktieren und wobei der mindestens eine Eingangsteil (10) gegenüber dem mindestens einen Ausgangsteil (9) um eine gedachte Drehachse drehbar gelagert ist, sodass der mindestens eine Ausgangskanal (6) durch Drehung des mindestens einen Ausgangsteils (9) relativ zum mindestens einen Eingangsteil (10) in kommunikative Verbindung mit einem der mindestens zwei Eingangskanäle (7) oder mit mindestens einem Spülmittelauslassbereich (32) des Spülmittelreservoirs (12) bringbar ist, **dadurch gekennzeichnet, dass** das Spülmittelreservoir (12) durch mindestens eine relativ zur mindestens einen Kontaktebene (17) versetzte Vertiefung (24) im mindestens einen Eingangsteil (10) und/oder im mindestens einen Ausgangsteil (9) ausgebildet ist, wobei die gedachte Drehachse durch die mindestens eine Vertiefung (24) verläuft.

2. Ventil zum Verteilen von Flüssigkeiten umfassend
- mindestens einen Eingangsteil, wobei im mindestens einen Eingangsteil mindestens ein Eingangskanal vorgesehen ist, und
- mindestens einen Ausgangsteil, wobei im mindestens einen Ausgangsteil mindestens zwei Ausgangskanäle vorgesehen sind, und
- ein Spülmittelreservoir,
wobei der mindestens eine Eingangsteil und der mindestens eine Ausgangsteil miteinander, zumindest bereichsweise dichtend, in mindestens einer Kontaktebene kontaktieren und wobei der mindestens eine Eingangsteil gegenüber dem mindestens einen Ausgangsteil um eine gedachte Drehachse drehbar gelagert ist, sodass mindestens einer der mindestens zwei Ausgangskanäle durch Drehung des mindestens einen Ausgangsteils relativ zum mindestens einen Eingangsteil in kommunikative Verbindung mit dem mindestens einen Eingangskanal oder mit mindestens einem Spülmittelauslassbereich des Spülmittelreservoirs bringbar ist, **dadurch gekennzeichnet, dass** das Spülmittelreservoir durch mindestens eine relativ zur mindestens einen Kontaktebene versetzte Vertiefung im mindestens einen Eingangsteil und/oder im mindestens einen Ausgangsteil ausgebildet ist, wobei die gedachte Drehachse durch die mindestens eine Vertiefung verläuft.

3. Ventil (11) nach einem der vorhergehenden Ansprüche, wobei die mindestens eine Vertiefung (24) so ausgeformt ist, dass eine auf die gedachte Drehachse orthogonale, gedachte Gerade zwischen dem mindestens einen Spülmittelauslassbereich (32) und der gedachten Drehachse vollständig in der mindestens einen Vertiefung (24) angeordnet ist.

4. Ventil (11) nach einem der vorhergehenden Ansprüche, wobei die mindestens eine Vertiefung (24) eine im Wesentlichen zylindrische Ausnehmung (25) aufweist, wobei die gedachte Drehachse durch die zylindrische Ausnehmung (25) verläuft, wobei die gedachte Drehachse vorzugsweise durch die Mittelachse der zylindrischen Ausnehmung (25) verläuft.

5. Ventil (11) nach einem der vorhergehenden Ansprüche, wobei die mindestens eine Vertiefung (24) mindestens einen Nutenbereich (26) aufweist, vorzugsweise wobei
- der mindestens eine Nutenbereich (26) mindestens eine Nut (27) aufweist, wobei die mindestens eine Nut (27) im Wesentlichen gerade, besonders bevorzugt entlang der radialen Richtung, ausgeformt ist, und wobei in jeweils einer Nut (27) ein Spülmittelauslassbereich (32) angeordnet ist, und/oder
- der mindestens eine Ausgangskanal (6) durch Drehung des mindestens einen Ausgangsteils (9) relativ zum mindestens einen Eingangsteil (10) in kommunikative Verbindung mit dem mindestens einen Nutenbereich (26) der mindestens einen Vertiefung (24) bringbar ist.

6. Ventil (11) nach Anspruch 4 und 5, wobei der mindestens eine Nutenbereich (26) radial außerhalb der mindestens einen zylindrischen Ausnehmung (25) angeordnet ist.

7. Ventil (11) nach dem vorhergehenden Anspruch, wobei die mindestens zwei Eingangskanäle (7) jeweils einen Eingangskanalauslass (72) in der mindestens einen Kontaktebene (17) aufweisen, wobei ein erster Eingangskanalauslass (72) und ein zweiter Eingangskanalauslass (72) radial außerhalb der zylindrischen Ausnehmung (25) der mindestens einen Vertiefung (24) angeordnet sind und/oder wobei ein erster Eingangskanalauslass (72) auf einer ersten Seite und ein zweiter Eingangskanalauslass (72) auf einer zweiten Seite von mindestens einer Nut (27) des Nutenbereichs (26) der mindestens einen Vertiefung (24) angeordnet sind.

8. Ventil (11) nach einem der vorhergehenden Ansprüche, wobei mindestens ein Spülmitteleinlassbereich (31) des Spülmittelreservoirs (12) vorgesehen ist, wobei der Spülmitteleinlassbereich (31) radial weiter innen als der mindestens eine Spülmittelauslassbereich (32) angeordnet ist, vorzugsweise wobei der mindestens eine Spülmitteleinlassbereich (31) am Ende von mindestens einem Spülmittelkanal (8) angeordnet ist.

9. Ventil (11) nach einem der vorhergehenden Ansprüche, wobei das Ventil (11) mindestens einen Spülmittelkanal (8) aufweist, wobei der Spülmittelkanal (8) mit dem Spülmittelreservoir (12) in kommunikativer Verbindung steht, vorzugsweise wobei der mindestens eine Spülmittelkanal (8)
- im mindestens einen Ausgangsteil (9) angeordnet ist, und/oder
- im mindestens einen Eingangsteil (10) angeordnet ist.

10. Ventil (11) nach einem der vorhergehenden Ansprüche, wobei die mindestens zwei Eingangskanäle (7) jeweils einen Eingangskanalauslass (72) in der mindestens einen Kontaktebene (17) aufweisen und der mindestens eine Ausgangskanal (6) einen Ausgangskanaleinlass (61) in der mindestens einen Kontaktebene (17) aufweist, wobei der mindestens eine Spülmittelauslassbereich (32) jeweils zwischen zwei Eingangskanalauslässen (72) angeordnet ist, vorzugsweise wobei
- die mindestens zwei Eingangskanalauslässe (72) und/oder die Ausgangskanalauslässe (61) in einem einzigen radialen Abstand zur gedachten Drehachse angeordnet sind, und/oder
- der mindestens eine erste Eingangskanalauslass (72) und der mindestens eine zweite Eingangskanalauslass (72) in unterschiedlichen Winkelbereichen bezüglich der gedachten Drehachse angeordnet sind, wobei der mindestens eine Spülmittelauslassbereich (32) in einem Winkelbereich zwischen dem mindestens einen ersten Eingangskanalauslass (72) und dem mindestens einen zweiten Eingangskanalauslass (72) angeordnet ist.

11. Ventil (11) nach einem der vorhergehenden Ansprüche, mindestens zwei Ausgangskanäle (6) vorgesehen sind, sodass die mindestens zwei Ausgangskanäle (6) durch Drehung des mindestens einen Ausgangsteils (9) relativ zum mindestens einen Eingangsteil (10) in kommunikative Verbindung mit mindestens zwei Eingangskanälen (7) oder mit mindestens einem Spülmittelauslassbereich (32) des Spülmittelreservoirs (12) bringbar sind.

12. Ventil (11) nach einem der vorhergehenden Ansprüche, wobei das Ventil (11) ein Gehäuse (1) aufweist, wobei das Gehäuse (1) drehfest mit dem mindestens einen Eingangsteil (10) verbunden ist und wobei der mindestens eine Ausgangsteil (9) drehbar im Gehäuse gelagert ist, oder umgekehrt, vorzugsweise wobei der mindestens eine Ausgangsteil (9) an seinen Seitenflächen (28) ohne einen Lagerstift im Gehäuse (1) gelagert ist.

13. Wäschedosiersystem (43) mit einem Ventil (11) nach einem der vorhergehenden Ansprüche, vorzugsweise wobei die mindestens zwei Eingangskanäle (7) an mindestens einen Produktbehälter (37) zum Lagern einer Flüssigkeit angeschlossen sind.

14. Wäschedosiersystem (43) nach dem vorhergehenden Anspruch, wobei der mindestens eine Ausgangskanal (6) oder die mindestens zwei Eingangskanäle (7), vorzugsweise über einen Einspülverteiler (36), an mindestens einem Waschgerät (42), insbesondere mindestens einer Waschmaschine und/oder mindestens einem Geschirrspüler, angeschlossen ist/sind.

15. Wäschedosiersystem (43) nach einem der Anspruch 13 oder 14, wobei mindestens eine Pumpe (40) stromabwärts des Ventils (11) angeordnet ist, wobei vorzugsweise mindestens zwei, bevorzugt genau zwei, Ausgangskanäle (6) des Ventils (11) vorgesehen sind und jeweils eine Pumpe (40) in einer Leitung (35), welche an einen Ausgangskanal (6) anschließt, angeordnet ist, oder bevorzugt wobei je eine Pumpe (40) in einer Leitung (35), welche an einen Eingangskanal (7) anschließt, angeordnet ist.

16. Wäschedosiersystem (43) nach einem der Ansprüche 13 bis 15, wobei das mindestens eine Ausgangsteil (9) oben angeordnet ist und das mindestens eine Eingangsteil (10) unten angeordnet ist, oder umgekehrt.

17. Verfahren zum Auswählen von Flüssigkeiten mit einem Ventil (11) nach einem der Ansprüche 1 bis 12, aufweisend die folgenden, vorzugsweise chronologisch durchgeführten, Verfahrensschritte:
- Drehung des mindestens einen Ausgangsteils (9) relativ zum mindestens einen Eingangsteil (10) in eine erste Auswahlstellung, wobei in der ersten Auswahlstellung mindestens ein erster Eingangskanal (7) der mindestens zwei Eingangskanäle (7) mit dem mindestens einen Ausgangskanal (6) in kommunikativer Verbindung steht,
- Drehung des mindestens einen Ausgangsteils (9) relativ zum mindestens einen Eingangsteil (10) in eine Spülstellung, wobei in der Spülstellung das Spülmittelreservoir (12) mit dem mindestens einen Ausgangskanal (6) in kommunikativer Verbindung steht,
- Drehung des mindestens einen Ausgangsteils (9) relativ zum mindestens einen Eingangsteil (10) in eine zweite Auswahlstellung, wobei in der zweiten Auswahlstellung mindestens ein zweiter Eingangskanal (7) der mindestens zwei Eingangskanäle (7) mit dem mindestens einen Ausgangskanal (6) in kommunikativer Verbindung steht.
